# EUROPÄISCHE PATENTSCHRIFT

(11) **EP 2 915 170 B1**
(45) Veröffentlichungstag und Bekanntmachung des Hinweises auf die Patenterteilung: **30.11.2016**
(21) Anmeldenummer: 14700140.8
(22) Anmeldetag: 03.01.2014
(51) Int. Cl.: H01B 3/02, H01B 3/04, H02K 3/30, H02K 15/10

(54) **ISOLATIONSANORDNUNG FÜR EINE HOCHSPANNUNGSMASCHINE**
INSULATION ARRANGEMENT FOR A HIGH VOLTAGE MACHINE
ENSEMBLE D'ISOLATION POUR UNE MACHINE HAUTE TENSION

(30) Priorität: 23.01.2013 DE 102013201053
(43) Veröffentlichungstag der Anmeldung: 09.09.2015
(73) Patentinhaber: Siemens Aktiengesellschaft, 80333 München (DE)
(72) Erfinder: EDER, Florian, 91052 Erlangen (DE); LANG, Steffen, 91352 Hallerndorf (DE); PREIBISCH, Michael, 90762 Fürth (DE)
(86) Internationale Anmeldenummer: PCT/EP2014/050039
(87) Internationale Veröffentlichungsnummer: WO 2014/114472

(56) Entgegenhaltungen:
- EP-A1- 1 727 160
- EP-A1- 2 520 619
- WO-A1-2011/138173
- US-A1- 2007 141 324

## Beschreibung

Die vorliegende Erfindung betrifft eine Isolationsanordnung für eine Hochspannungsmaschine mit einem Wicklungsstab, welcher eine Hauptisolation mit einer ersten und einer zweiten Schicht aufweist. Die Erfindung betrifft zudem einen Generator mit der Isolationsanordnung sowie ein Verfahren zur Herstellung der Isolationsanordnung.

Zur Erzeugung von elektrischer Energie werden typischerweise Hochspannungsmaschinen in Form von Generatoren eingesetzt. Die EP 1 981 150 A2 beschreibt einen Generator mit einem drehbaren Läufer und einem um den Läufer angeordneten Ständer. Der Ständer weist ein rotationssymmetrisch ausgestaltetes Blechpaket auf, in dem elektrisch leitende Wicklungsstäbe verlaufen. An das Blechpaket schließt sich beidseitig ein Wicklungskopf an, der die Wicklungsstäbe über Verbindungsstege zu einer geschlossenen Wicklung verbindet.

Im Betrieb von Hochspannungsmaschinen mit Leistungen von über 500 MVA können Bemessungspannungen von über 10 kV erreicht werden. Die Komponenten sind entsprechend hohen mechanischen, thermischen und elektrischen Belastungen ausgesetzt. Insbesondere die im Blechpaket verlaufenden Wicklungsstäbe sind daher mit einer elektrischen Isolation ausgestattet, die eine Erosion durch elektrische Teilentladungen und die dadurch entstehenden "Treeing"-Kanäle verhindern soll.

In US 2007/0141324 A1 ist beispielsweise eine Hauptisolation mit Glimmerpartikeln beschrieben, die eine Plättchenform mit einem Aspektverhältnis von mindestens 50 aufweisen. Das heißt das Aspektverhältnis aus Länge und Breite auf der einen Seite und Dicke auf der anderen Seite liegt bei mindestens 50. Derartige Hauptisolationen wirken elektrisch und thermisch isolierend.

Im Betrieb der Hochspannungsmaschine entsteht Wärme im Leiter des Wicklungsstabes, die wegen der schlechten Wärmeleitfähigkeit der Hauptisolation (typischerweise < 0.25 W/mK) nicht abgeführt werden kann. Die Folge ist ein Wärmestau, der insbesondere innerhalb des Blechpakets ausgeprägt ist. Zudem können aufgrund von Inhomogenitäten und Fehlstellen in der Hauptisolation lokal teilentladungsbedingte Temperaturerhöhungen (hot spots) auftreten, welche die Komponenten der Hauptisolation altern lassen. Bei fortgeschrittener Alterung kann es zum Erdschluss der Leiter kommen, was zum Komplettausfall der Hochspannungsmaschine führt.

Daher ist es notwendig Mittel vorzusehen, die zur Kühlung des Generators und insbesondere der Wicklungsstäbe beitragen. So ist es bekannt, Generatoren je nach Leistungsklasse mit Luft, Wasserstoff oder Wasser zu kühlen.

Um die Wärmeleitfähigkeit der Hauptisolation weiter zu verbessern, ist es aus US 2007/0141324 A1 weiterhin bekannt, wärmeleitfähige Partikel im Rahmen der Vakuum-Druck-Imprägnierung (VPI) in die Hauptisolation einzubringen. Beim VPI-Prozess werden poröse Bänder auf die Wicklungsstäbe gewickelt. Die Wicklungsstäbe werden einzeln (single-VPI) oder zusammen (global-VPI) unter Vakuumbedingungen in einem Harz getränkt, unter Druck gesetzt und anschließend ausgehärtet.

In der EP 2 520 619 A1 wird die Verwendung von plättchenförmigen Aluminiumoxidpartikeln anstelle der bekannten plättchenförmigen Glimmerpartikel in Hochspannungsisolatoren offenbart, wobei Aluminiumoxid mit ca. 25 bis 40 W/mK eine deutlich höhere Wärmeleitfähigkeit als Glimmer hat.

Weitere Verfahren beruhen auf der Resin-Rich-Technology, bei der poröse Bänder mit einem polymeren Isolierstoff im B-Zustand auf die einzelnen Wicklungsstäbe aufgebracht werden. Der Isolierstoff ist dabei nicht vollständig vernetzt und kann anschließend wieder erwärmt, verpresst und ausgehärtet werden. Die US 777,639,2 B2 beschreibt ein Verbundisolierband, welches wärmeleitfähige Komponenten enthält, wobei diese der Harzmischung zugesetzt werden und das Verbundband durchdringen.

Aufgabe der Erfindung ist es, eine Isolationsanordnung mit einem Wicklungsstab bereitzustellen, die neben den elektrischen Isolationseigenschaften auch wärmeleitfähige Eigenschaften aufweist. Zusätzlich soll die Isolationsanordnung einfach und kostengünstig in der Herstellung sein und ohne Aufwand in bestehende Fertigungsprozesse integrierbar sein.

Es wird eine Isolationsanordnung für eine Hochspannungsmaschine mit einem Wicklungsstab vorgeschlagen, welcher eine Hauptisolation mit einer ersten und einer zweiten Schicht aufweist. Dabei weist die erste Schicht plättchenförmige Glimmerpartikel und die zweite Schicht plättchenförmige Aluminiumoxidpartikel auf.

Es wird weiterhin ein Verfahren zur Herstellung einer Isolationsanordnung für eine Hochspannungsmaschine mit einem Wicklungsstab vorgeschlagen. Dabei umfasst das Verfahren folgende Schritte:
- Bereitstellen eines Wicklungsstabes, mindestens einer ersten Schicht mit plättchenförmigen Glimmerpartikeln und mindestens einer zweiten Schicht mit plättchenförmigen Aluminiumoxidpartikeln; und
- Applizieren einer ersten Schicht und einer zweiten Schicht, um eine Hauptisolation auf dem Wicklungsstab zu bilden.

Durch Einbringen der zweiten Schicht mit plättchenförmigen Aluminiumoxidpartikeln in die Hauptisolation wird eine Schicht in die Isolationsanordnung integriert, die Wärme transportiert. Dadurch wird im Betrieb der Hochspannungsmaschine eine bessere Wärmeverteilung erreicht, und die Wärmeverteilung wird gegenüber rein Glimmerpartikel-basierten Isolationsanordnungen vergleichmäßigt. Auch Eigenschaften wie die Durchschlagsfestigkeit, die Permeabilität oder die Teilentladungsresistenz bleiben erhalten. So wird eine Isolationsanordnung bereitgestellt, die neben den elektrischen Isolationseigenschaften auch die gewünschten wärmeleitfähigen Eigenschaften aufweist.

Zusätzlich kann die vorgeschlagene Isolationsanordnung mit Wicklungsstab einfach und kostengünstig hergestellt werden. Insbesondere kann das Ausbilden der ersten und zweiten Schichten ohne Aufwand in bestehende Fertigungsprozesse integriert werden, da die Integration der zweiten Schicht nur eine unwesentliche Veränderung erfordert.

Unter einer Hochspannungsmaschine wird im vorliegenden Zusammenhang insbesondere ein Generator, wie ein Turbogenerator, mit einer elektrischen Leistung von beispielsweise mehr als 50 MVA verstanden. Bevorzugte Generatoren haben Leistungen von mehr als 500 MVA und weisen Bemessungsspannungen von mehr als 1 kV, bevorzugt von mehr als 10 kV, auf.

Für Hochspannungsmaschinen kann der Wicklungsstab einen Verbund aus mehreren elektrischen Leitern aufweisen, die Ströme von mehreren 10 kA führen können. Als elektrische Leiter werden beispielsweise Kupferleiter verwendet.

Eine Isolation des Wicklungsstabes kann als Teilisolation zwischen Teilleitern, das heißt zwischen einzelnen elektrischen Leitern, oder als Hauptisolation zwischen dem Verbund von elektrischen Leitern und dem auf Massenpotential liegenden Bereich mit Blechpaket und Wicklungskopf realisiert sein. Weiterhin kann die Hauptisolation den Wicklungsstab vollständig umhüllen. Die Hauptisolation bildet dabei einen Ring um den Wicklungsstab, der eine äußere und eine innere Umfangsseite aufweist. Die Dicke des Hauptisolationsringes hängt von der Bemessungsspannung der Hochspannungsmaschine sowie den Fertigungs- und Betriebsbedingungen ab.

Neben der Hauptisolation kann der Wicklungsstab weiterhin eine innere und eine äußere Potentialsteuerung aufweisen, die im Betrieb der Hochspannungsmaschine das Potential innerhalb der Hauptisolation abbauen. Hierbei ist die innere Potentialsteuerung zwischen dem Wicklungsstab und der Hauptisolation angeordnet. Die innere Potentialsteuerung ist damit auf der inneren Umfangsseite des Hauptisolationsringes angeordnet. Die äußere Potentialsteuerung umgibt die Hauptisolation auf der auf Massenpotential liegenden Seite. Die äußere Potentialsteuerung ist damit auf der äußeren Umfangsseite des Hauptisolationsringes angeordnet.

Es können auch mehrere erste und/oder zweite Schichten vorgesehen sein.

"Axial" und "radial" beziehen sich vorliegend immer auf eine Mittelachse des Wicklungsstabes.

In einer Ausführungsform ist die zweite Schicht dazu eingerichtet, Wärme in axialer Richtung des Wicklungsstabes zu transportieren. So wird in der in der Hauptisolation eine anisotrope Wärmeleitung realisiert, die Wärme im Wesentlichen axial statt radial leitet. Da im Betrieb der Hochspannungsmaschine die Wärmeentwicklung in Axial-Richtung entlang des Wicklungsstabes in der Mitte am stärksten ist, wird die Wärme durch die zweite Schicht von der Mitte des Wicklungsstabes in axialer Richtung zu den Enden hin transportiert.

In einer weiteren Ausführungsform weisen die plättchenförmigen Aluminiumoxidpartikel ein Aspektverhältnis von 10 bis 100 und bevorzugt von 40 bis 80 auf. Das Aspektverhältnis bezieht sich hierbei auf das Verhältnis von jeweils Länge und Breite zu Dicke. Die Aluminiumoxidpartikel sind dabei auf Basis von Aluminiumoxid der Formel Al₂O₃ gebildet.

Vorzugsweise sind die plättchenförmigen Aluminiumoxidpartikel flächig in der zweiten Schicht ausgerichtet. Dadurch wird die teilentladungsinduzierte Erosion und insbesondere die Bildung von "Treeing"-Kanäle in der Hauptisolation reduziert. Neben der Erhöhung der elektrischen Festigkeit wird durch die flächige Ausrichtung zusätzlich die mechanische Festigkeit der zweiten Schicht erhöht.

In einer weiteren Ausführungsform berühren sich die plättchenförmigen Aluminiumoxidpartikel. Diese Kontaktierung zwischen Aluminiumoxidpartikeln resultiert in einem besseren Wärmeübertrag zwischen einzelnen Aluminiumoxidpartikeln und verbessert somit die Wärmeleitfähigkeit der zweiten Schicht.

Hierbei können benachbarte plättchenförmige Aluminiumoxidpartikel in axialer Richtung aneinander stoßen oder zumindest teilweise überlappen. Dadurch wird in axialer Richtung ein Kontakt zwischen den plättchenförmigen Aluminiumoxidpartikel geschaffen, wodurch die Wärmeleitfähigkeit der zweiten Schicht in axialer Richtung zunimmt.

Um die Bildung von Erosionskanälen oder Treeing-Kanälen in der zweiten Schicht zu verhindern, können die plättchenförmigen Aluminiumoxidpartikel innerhalb der zweiten Schicht in mehreren Lagen angeordnet sein. Dabei können die plättchenförmigen Aluminiumoxidpartikel in benachbarten Lagen zueinander versetzt angeordnet sein.

In einer weiteren Ausführungsform liegen die plättchenförmigen Aluminiumoxidpartikel in einer Matrix vor. Die Matrix kann insbesondere eine polymere Matrix, beispielsweise auf Polysilazan-Basis, Polyesterimid-Basis oder Polyetherpolyol-Basis, umfassen.

In einer weiteren Ausführungsform weist die zweite Schicht mehr als 40 Vol.-% plättchenförmige Aluminiumoxidpartikel eingebettet in einer Matrix auf. Hierbei beziehen sich Vol.-% auf das Gesamtvolumen der zweiten Schicht. Bei einem höheren Volumenanteil von Aluminiumoxidpartikeln, können sich die Partikel berühren und entsprechende Wärmeleitpfade ausbilden. Dadurch wird die Wärmeleitfähigkeit bis zu einer Sättigung erhöht. Der Anteil an Aluminiumoxidpartikel liegt vorzugsweise in einem überpartikulären Bereich, das heißt die Wärmeleitfähigkeit liegt in der Sättigung. So kann eine axiale Wärmeleitfähigkeit der Isolationsanordnung erreicht werden, die bei mehr als 2 W/mK, bevorzugt bei mehr als 3 W/mK liegt.

In einer weiteren Ausführungsform weist die Hauptisolation zumindest zwei erste Schichten auf, zwischen denen die zumindest eine zweite Schicht angeordnet ist. Insbesondere kann die Hauptisolation eine um Faktor 5 bis 50, bevorzugt 10 bis 25, größere Anzahl von ersten Schichten als zweiten Schichten aufweisen. Die Wärmeleitfähigkeit der Hauptisolation wird somit bereits mit einer geringen Anzahl an zweiten Schichten deutlich verbessert, was den Materialaufwand reduziert und sich kostensparend auswirkt.

In einer weiteren Ausführungsform erstreckt sich die zweite Schicht axial und umfangsmäßig in der Hauptisolation. Die ersten und zweiten Schichten umhüllen den Wicklungsstab vorzugsweise vollständig. Dadurch wird zum einen die vollständige Isolation des Wicklungsstabes und zum anderen eine gleichmäßige Wärmeleitung innerhalb der Hauptisolation gewährleistet.

In einer weiteren Ausführungsform ist die zweite Schicht in der Hauptisolation mittig und/oder zu einer Umfangsseite der Hauptisolation versetzt angeordnet. In der Isolationsanordnung kann sich die zweite Schicht somit in Dickenrichtung mittig innerhalb der Hauptisolation befinden. So wird axial eine Vergleichmäßigung der Wärmeverteilung innerhalb der Hauptisolation erreicht. Zusätzlich oder alternativ kann die zweite Schicht in der Isolationsanordnung in Dickenrichtung von der Mitte der Hauptisolation zum Wicklungsstab oder zu einer auf Massenpotential liegenden Seite der Hauptisolation versetzt angeordnet sein. Durch die versetzte Anordnung der zweiten Schicht innerhalb der Hauptisolation wird ein Kühleffekt für den Wicklungsstab mit elektrischen Leitern oder für das Blechpaket erzielt, das im verbauten Zustand an die Seite der Hauptisolation angrenzt, die auf Massenpotential liegt. Die plättchenförmigen Aluminiumoxidpartikel können weiterhin auf einem Trägerband vorliegen, mit dem der Wicklungsstab umwickelt ist. Als Trägerband eignen sich insbesondere Gewebe, die zum Beispiel aus Polyester, Polyethylenterephthalat (PET) oder Glas hergestellt sind. Zur Ausbildung eines Isolierbandes können die in der Matrix enthaltenen plättchenförmigen Aluminiumoxidpartikel beispielsweise auf das Trägerband aufgeklebt werden. Dadurch ist die Durchimprägnierbarkeit der einzelnen Schichten weiterhin gegeben, so dass bestehende Fertigungsprozesse auf Basis des VPI-Prozesses oder der Resin-Rich-Technology verwendet werden können.

Die plättchenförmigen Glimmerpartikel können ein Aspektverhältnis von 10 bis 100 und bevorzugt von 40 bis 80 aufweisen. Die Glimmerpartikel sind auf Basis von Schichtsilicaten gebildet. Die Glimmerpartikel sind vorzugsweise in einer Matrix, insbesondere einer polymeren Matrix, beispielsweise auf Polysilazan-Basis, Polyesterimid-Basis oder Polyetherpolyol-Basis, enthalten.

Weiterhin können die plättchenförmigen Glimmerpartikel flächig in der ersten Schicht ausgerichtet sein und in mehreren Lagen überlappend angeordnet sein. Durch die Plättchenform können sich die Glimmerpartikel zueinander orientieren. Die Wechselwirkung der Oberflächen resultiert dabei in Bindungskräften, die direkt mit den Kontaktflächen benachbarter Glimmerpartikel zusammenhängen. Dies ergibt sich thermodynamisch insbesondere aufgrund der Wechselwirkung der Glimmerpartikel durch van-der-Waals-Kräfte oder Wasserstoffbrückenbindungen. Dadurch werden die elektrische und die mechanische Festigkeit der Isolationsanordnung erhöht.

Die Glimmerpartikel in der Matrix bilden somit mechanisch beanspruchbares Glimmerpapier, das um Wicklungsstäbe gewickelt werden kann, mittels eines Reaktionsharzes imprägniert werden kann und eine gute Barriere für Treeing-Kanäle aufweist. Gleichzeitig wird eine hohe Beständigkeit gegenüber Teilentladungen realisiert, die im Betrieb einer Hochspannungsmaschine auftreten.

Das Glimmerpapier kann zur weiteren Verbesserung der mechanischen Festigkeit auf ein Trägerband, etwa aus Glas oder Polyestergewebe, aufgebracht werden. Abschließend können die Komponenten in einen Verbundwerkstoff umgewandelt werden. Erreicht wird dies, indem das Glimmerpapier mittels des VPI-Prozesses mit flüssigem und reaktivem Polymer imprägniert und im Folgeschritt ausgehärtet wird. Alternativ kann auch die Resin-Rich-Technology zum Einsatz kommen. Die Wärmeleitfähigkeit von mit Epoxidharz imprägniertem Glimmerpapier auf Glas- oder Polyestergewebe als Trägerband kann beispielsweise 0,2 bis 0,25 W/mK bei Raumtemperatur betragen.

In einer weiteren Ausführungsform werden die Glimmerpartikel und die Aluminiumoxidpartikel auf dem Trägerband bereitgestellt und die erste und zweite Schicht durch Umwickeln des Wicklungsstabes erzeugt. Damit können die umwickelten Wicklungsstäbe im Rahmen des VPI-Prozesses oder auf Basis der Resin-Rich-Technology weiterverarbeitet werden. So wird das Vorsehen der zweiten Schicht einfach und ohne weiteren Aufwand in bestehende Fertigungsprozesse integriert werden.

Zudem wird ein Generator vorgeschlagen, der den vorstehend beschriebenen Wicklungsstab umfasst. Der Wicklungsstab kann dabei durch ein Blechpaket des Generators geführt sein und beidseitig überstehende Enden aufweisen, die zur Ausbildung einer Leiterschleife an einem Wickelkopf umgelenkt werden.

In der Generatormitte oder innerhalb des Blechpakets treten starke Wärmeansammlungen auf, die durch die zweite, leitfähige Schicht der Isolationsanordnung vergleichmäßigt werden. So kann die zweite Schicht im Betrieb des Generators Wärme effizient zu den Wickelköpfen leiten. Dadurch sinken sowohl die maximale wie auch die mittlere auftretende Temperatur in der Isolationsanordnung. Dieser Effekt verlangsamt die Alterung der Hauptisolation und steigert die Durchschlagsfähigkeit.

Zusätzlich können die Mehrkosten gering gehalten werden, da bereits nur eine oder wenige zweite Schichten ausreichen, um diesen Effekt zu erzielen. Damit kann auch die Kühlung des Generators kleiner dimensioniert werden. Beispielsweise kann eine Kühlung ausreichen, die eigentlich für kleinere Leistungsklassen von Generatoren bestimmt ist. Somit sinken trotz gegebenenfalls erhöhter Materialkosten für die Isolationsanordnung die Gesamtkosten, da der Peripherieaufwand für die Kühlung sinkt.

Im Folgenden wird anhand der beigefügten schematischen Zeichnung die Erfindung näher erläutert.

Dabei zeigen:
Fig. 1 ausschnittsweise einen Längsschnitt eines Generatorständers mit einem Blechpaket und einer Isolationsanordnung;
Fig. 2 einen Längsschnitt einer Isolationsanordnung mit einer beispielhaften Hauptisolation;
Fig. 3 einen vergrößerten Ausschnitt einer zweiten Schicht mit plättchenförmigen Aluminiumoxidpartikeln in der Isolationsanordnung der Fig. 2;
Fig. 4 ein axialer Temperaturverlauf innerhalb der Hauptisolation der Fig. 2;
Fig. 5 einen Längsschnitt einer Isolationsanordnung mit einer weiteren beispielhaften Hauptisolation;
Fig. 6 einen Längsschnitt einer Isolationsanordnung mit einer weiteren beispielhaften Hauptisolation; und
Fig. 7 ein Ablauf eines Verfahrens zum Herstellen der erfindungsgemäßen Isolationsanordnung in Form eines Flussdiagramms.

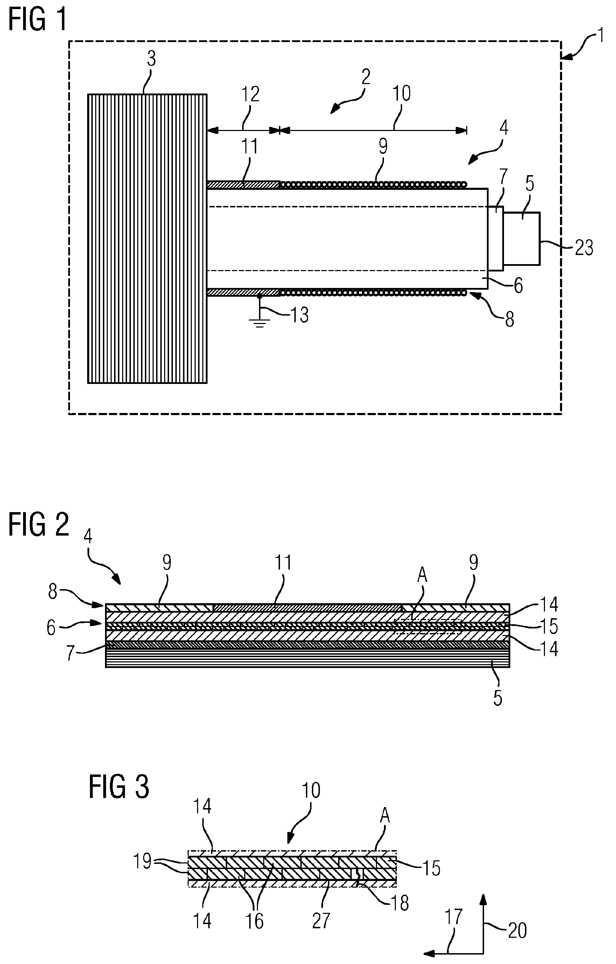

Fig. 1 zeigt einen Ausschnitt eines Generators 1, der einen Generatorständer 2 mit einem Blechpaket 3 und einer Isolationsanordnung 4 umfasst, die einen Wicklungsstab 5 aufweist.

Die Isolationsanordnung 4 ist samt Wicklungsstab 5 durch das Blechpaket 3 geführt. Die Enden der Isolationsanordnung 4 ragen aus dem Blechpaket 3. Der Wicklungsstab 5 wird zur Ausbildung von Leiterschleifen am Wickelkopf (nicht dargestellt) umgelenkt. Die in Fig. 1 gezeigte Anordnung ist typischerweise symmetrisch mit Wicklungsstabenden 5 auf beiden Seiten des Blechpakets 3 aufgebaut.

Der Wicklungsstab 5 ist von einer Hauptisolation 6 umhüllt. Um Grenzflächenteilentladungen zwischen den Komponenten des Generatorständers 2 zu vermeiden, ist die Hauptisolation 6 weiterhin mit Schichten 7, 8 umgeben.

So ist zwischen dem Wicklungsstab 5 und der Hauptisolation 6 eine Schicht 7 als innere Potentialsteuerung angeordnet. Zwischen Blechpaket 3 und Hauptisolation 6 befindet sich ferner eine weitere Schicht 8, die als Glimmschutz 8 ausgebildet ist. Dieser umfasst einen Endenglimmschutz 9 in einem ersten Abschnitt 10 und einen Außenglimmschutz 11 in einem zweiten Abschnitt 12. Der Außenglimmschutz 11 ist mit einer Erdung 13 verbunden. Der Außenglimmschutz 11 umhüllt die Hauptisolation 6 innerhalb des Blechpakets 3 und wird nach Austritt des Wicklungsstabes 5 aus dem Blechpaket 3 über eine Teillänge 12 weiter geführt. Der Endenglimmschutz 9 schließt sich unmittelbar an den Außenglimmschutz 11 an. Durch die Schichten 7, 8 wird die elektrische Feldstärke innerhalb der Hauptisolation 6 ausgehend von der inneren Potentialsteuerung 7 zum Glimmschutz 8 abgebaut. An den Enden des Wicklungsstabes 5, der beidseitig aus dem Blechpaket 3 herausragt, ist der Endenglimmschutz 9 vorgesehen, der das elektrische Potential ausgehend vom Außenglimmschutz 11 abbaut.

Nach einem der Anmelderin intern bekannten Aufbau wird die Hauptisolation 6 von plättchenförmigen Glimmerpartikeln in einer Matrix auf Polyetherpolyol-Basis, wie Epoxidharz, gebildet. Dieses Glimmerpapier ist weiterhin auf einem Trägerband, wie Glas- oder Polyestergewebe, vorgesehen, das als Hauptisolation 6 um den Wicklungsstab 5 der Isolationsanordnung 4 gewickelt ist.

In derartigen Anordnungen beträgt die Wärmeleitfähigkeit der Hauptisolation 6 ca. 0,2 bis 0,25 W/mK bei Raumtemperatur. Daher kann es insbesondere innerhalb des Blechpakets 3 zu einem Wärmestau kommen, der den Alterungsprozess der Hauptisolation 6 beschleunigt. Zudem können aufgrund von Inhomogenitäten und Fehlstellen in der Hauptisolation 6 lokal teilentladungsbedingte Temperaturerhöhungen (hot spots) auftreten, welche die Komponenten der Hauptisolation 6 altern lassen. Bei fortgeschrittener Alterung kann es zum Erdschluss des Wicklungsstabes 5 kommen, was zum Komplettausfall des Generators 1 führt.

Fig. 2 zeigt einen Längsschnitt einer Isolationsanordnung 4 mit einem Wicklungsstab 5 und einer Hauptisolation 6.

Die Hauptisolation 6 umfasst zwei erste Schichten 14 mit plättchenförmigen Glimmerpartikeln und eine zweite Schicht 15 mit plättchenförmigen Aluminiumoxidpartikeln. Dabei weisen Aluminiumoxidpartikel eine bessere Wärmeleitfähigkeit auf als Glimmerpartikel. Die elektrischen Eigenschaften sind jedoch vergleichbar. Somit wird durch das Einbringen der zweiten Schicht 15 eine wärmeleitfähige Schicht in die Hauptisolation 6 integriert, die Wärme innerhalb der Hauptisolation 6 transportieren kann.

Die Hauptisolation 6 mit den Schichten 14, 15 umhüllt den Wicklungsstab 5 vollständig. So wird im Querschnitt gesehen ein Hauptisolationsring um den Wicklungsstab 5 gebildet, der eine innere und eine äußere Umfangsseite aufweist. In der gezeigten Ausführungsform ist die zweite Schicht 15 mittig bezogen auf die Dicke des Hauptisolationsringes innerhalb desselben zwischen den beiden ersten Schichten 14 angeordnet. So wird axial eine Vergleichmäßigung der Wärmeverteilung innerhalb der Hauptisolation 6 erreicht.

Die zweite Schicht 15 erstreckt sich dabei axial und umfangsmäßig zwischen den ersten Schichten 15 der Hauptisolation 6. In anderen Ausführungsformen der Hauptisolation 6 liegt das Verhältnis zwischen der Anzahl von ersten Schichten 14 zu der Anzahl von zweiten Schichten 15 im Bereich von 5 bis 50 und bevorzugt im Bereich von 10 bis 25. Beispielsweise kann die Hauptisolation 6 insgesamt 22 erste Schichten 15 und eine oder zwei zweite Schichten 15 aufweisen. Die Wärmeleitfähigkeit der Isolationsanordnung 4 wird somit bereits mit einer geringen Anzahl von zweiten Schichten 15 deutlich verbessert, was den Materialaufwand wesentlich reduziert.

Fig. 3 zeigt den in Fig. 2 angedeuteten vergrößerten Ausschnitt A der zweiten Schicht 15 mit plättchenförmigen Aluminiumoxidpartikeln 16 in der Hauptisolation 6 der Isolationsanordnung 4.

Die plättchenförmigen Aluminiumoxidpartikel 16 weisen ein Aspektverhältnis von 10 bis 100 und sind in einer polymeren Matrix auf Polyetherpolyol-Basis, wie Epxoidharz, auf einem Gewebe enthalten. Dabei sind die plättchenförmigen Aluminiumoxidpartikel 16 flächig in der zweiten Schicht 15 ausgerichtet, um die mechanische und elektrische Festigkeit der zweiten Schicht 15 zu erhöhen. Weiterhin berühren sich die plättchenförmigen Aluminiumoxidpartikel 16. Benachbarte plättchenförmige Aluminiumoxidpartikel 16 stoßen dabei in axialer Richtung 17 aneinander an oder überlappen zumindest teilweise. Dadurch wird in axialer Richtung 17 ein besserer Wärmeübertrag zwischen einzelnen Aluminiumoxidpartikeln 16 und eine erhöhte Wärmeleitfähigkeit in der zweiten Schicht 15 erreicht.

Um weiterhin die Bildung von Erosionskanäle oder Treeing-Kanälen 18 in der zweiten Schicht 15 insbesondere in radialer Richtung 20 bezogen auf den Wicklungsstab 5 zu verhindern, sind die plättchenförmigen Aluminiumoxidpartikel 16 innerhalb der zweiten Schicht 15 in mehreren Lagen 19 angeordnet. In benachbarten Lagen 19 sind die Aluminiumoxidpartikel 16 versetzt zueinander angeordnet.

Um eine wärmeleitfähige Packung der zweiten Schicht 15 zu realisieren, enthält die zweite Schicht 50 bis 75 Vol.-% plättchenförmige Aluminiumoxidpartikel 16. Denn ab einem bestimmten Volumenanteil von Aluminiumoxidpartikel 16 liegt die Wärmeleitfähigkeit in der Sättigung. So kann eine axiale Wärmeleitfähigkeit der Hauptisolation 6 von mehr als 2 W/mK, bevorzugt bei mehr als 3 W/mK, erreicht werden.

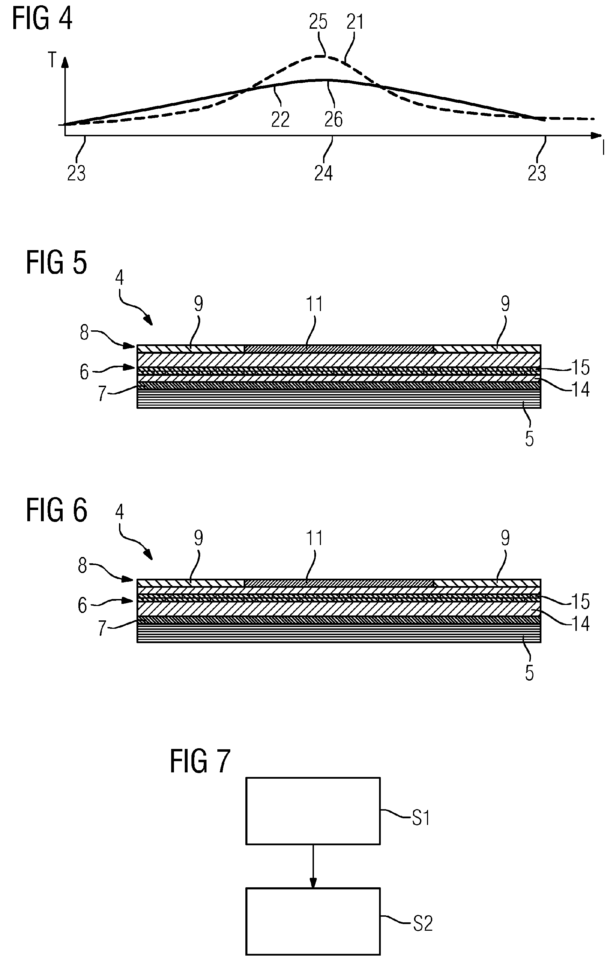

Fig. 4 zeigt einen axialen Temperaturverlauf 21, 22 innerhalb der Hauptisolation 6 mit und ohne zweite Schicht 15 gemäß Fig. 2.

Fig. 4 zeigt den Temperaturverlauf 21, 22 mit und ohne zweite Schicht 15 in der Hauptisolation 6, wobei die Temperatur T gegen die axiale Position l entlang des Wicklungsstabes 5 aufgetragen ist. Die Temperaturverläufe 21, 22 zeigen, dass die Wärmeentwicklung im Betrieb des Generators 1 in der Mitte 24 des Wicklungsstabes 5 am stärksten ist. So steigt der Temperaturverlauf 21 von den Enden 23 des Wicklungsstabes 5 zur Mitte 24 hin an und erreicht dort sein Maximum 25.

Ist eine zweite Schicht 15 in der Hauptisolation 6 vorgesehen, zeigt der Temperaturverlauf 22, dass eine Vergleichmäßigung der Wärmeverteilung stattfindet und das Maximum 26 des Temperaturverlaufes 22 kleiner ist als das des Temperaturverlaufes 21. Dies zeigt, dass im Betrieb des Generators 1 Wärme in axialer Richtung 18 von der Mitte 24 des Wicklungsstabes 5 zu den Enden 23 des Wicklungsstabes 5 transportiert wird. Die Wärmeleitung in der Hauptisolation 6 ist damit anisotrop, weil Wärme maßgeblich axial und nicht radial abgeleitet wird.

Fig. 5 zeigt einen Längsschnitt einer Isolationsanordnung 4 mit Wicklungsstab 5 und einer weiteren beispielhaften Hauptisolation 6.

Die in Fig. 5 dargestellte Ausführungsform der Isolationsanordnung 4 mit Wicklungsstab 5 und Hauptisolation 6 entspricht im Wesentlichen der in Fig. 2 gezeigten. Im Unterschied zu Fig. 2 ist die zweite Schicht 15 in Fig. 5 von der Mitte des Hauptisolationsringes in radialer Richtung 20 versetzt angeordnet. Im verbauten Zustand des Generators 1 bedeutet dies, dass die zweite Schicht 15 näher am Wicklungsstabes 5 angeordnet ist. Durch die versetzte Anordnung der zweiten Schicht 15 innerhalb der Hauptisolation 6 wird im Betrieb ein Kühleffekt für den Wicklungsstab 5 erzielt.

Fig. 6 zeigt einen Längsschnitt einer Isolationsanordnung 4 mit Wicklungsstab 5 und einer weiteren beispielhaften Hauptisolation 6.

Die in Fig. 6 dargestellte Ausführungsform des Wicklungsstabes 5 mit Hauptisolation 6 entspricht im Wesentlichen der aus Fig. 2. Im Unterschied zu Fig. 2 ist die zweite Schicht 15 in Fig. 6 von der Mitte der Hauptisolation 6 in radialer Richtung 20 versetzt angeordnet. Im verbauten Zustand des Generators 1 bedeutet dies, dass die zweite Schicht 15 näher am Blechpaket 2 angeordnet ist. Durch die versetzte Anordnung der zweiten Schicht 15 innerhalb der Hauptisolation wird im Betrieb ein Kühleffekt für das Blechpaket 3 erzielt.

Fig. 7 zeigt einen Ablauf eines Verfahrens zum Herstellen der Isolationsanordnung 4 in Form eines Flussdiagramms.

In einem ersten Schritt S1 werden der Wicklungsstab 5, mindestens eine erste Schicht 14 mit plättchenförmige Glimmerpartikeln und mindestens eine zweite Schicht 15 mit plättchenförmigen Aluminiumoxidpartikeln 16 bereitgestellt. Die plättchenförmigen Aluminiumoxidpartikel 16 sind auf einem Trägerband vorgesehen, mit dem der Wicklungsstab 5 umwickelt wird. Als Trägerband eignet sich dabei Polyester-, PET oder Glasgewebe. So ist die Durchimprägnierbarkeit der einzelnen Schichten weiterhin gegeben und bestehende Fertigungsprozesse auf Basis des VPI-Prozesses können verwendet werden. Weiterhin werden auch die Glimmerpartikel auf einem Trägerband bereitgestellt.

In einem zweiten Schritt S2 wird eine Abfolge von ersten und zweiten Schichten 14, 15 um den Wicklungsstab 5 appliziert, um die Hauptisolation 6 auszubilden. So können beispielsweise zehn erste Schichten 14 übereinander, hierauf eine zweite Schicht 15 und hierauf wiederum zehn erste Schichten 14 gewickelt werden. Dabei wird die Abfolge von ersten und zweiten Schichten 14, 15 durch Umwickeln des Wicklungsstabes 5 erzeugt. So kann der Fertigungsprozess einfach realisiert werden und das Vorsehen der zweiten Schicht 16 kann ohne weiteren Aufwand in bestehende Fertigungsprozesse integriert werden.

## Patentansprüche

1. Isolationsanordnung (4) für eine Hochspannungsmaschine (1), mit einem Wicklungsstab (5), welcher eine Hauptisolation (6) mit einer ersten und einer zweiten Schicht (14, 15) aufweist, wobei die erste Schicht (14) plättchenförmige Glimmerpartikel und die zweite Schicht (15) plättchenförmige Aluminiumoxidpartikel (16) aufweist.

2. Isolationsanordnung nach Anspruch 1,
**dadurch gekennzeichnet,**
**dass** die zweite Schicht (15) dazu eingerichtet ist, Wärme in axialer Richtung (17) des Wicklungsstabes (5) zu transportieren.

3. Isolationsanordnung nach Anspruch 1 oder 2,
**dadurch gekennzeichnet,**
**dass** die plättchenförmigen Aluminiumoxidpartikel (16) ein Aspektverhältnis von 10 bis 100 aufweisen.

4. Isolationsanordnung nach einem der Ansprüche 1 bis 3,
**dadurch gekennzeichnet,**
**dass** die plättchenförmigen Aluminiumoxidpartikel (16) flächig innerhalb der zweiten Schicht (15) ausgerichtet sind und sich berühren.

5. Isolationsanordnung nach einem der Ansprüche 1 bis 4,
**dadurch gekennzeichnet,**
**dass** benachbarte plättchenförmige Aluminiumoxidpartikel (16) in axialer Richtung (17) aneinander stoßen oder zumindest teilweise überlappen.

6. Isolationsanordnung nach einem der Ansprüche 1 bis 5,
**dadurch gekennzeichnet,**
**dass** die plättchenförmigen Aluminiumoxidpartikel (16) innerhalb der zweiten Schicht (16) in mehreren Lagen (19) angeordnet sind.

7. Isolationsanordnung nach Anspruch 6,
**dadurch gekennzeichnet,**
**dass** die plättchenförmigen Aluminiumoxidpartikel (16) in benachbarten Lagen (19) zueinander versetzt angeordnet sind.

8. Isolationsanordnung nach einem der Ansprüche 1 bis 7,
**dadurch gekennzeichnet,**
**dass** die zweite Schicht (15) mehr als 20 Vol.-%, bevorzugt mehr als 35 Vol.-% plättchenförmige Aluminiumoxidpartikel (16) eingebettet in einer Matrix aufweist.

9. Isolationsanordnung nach einem der Ansprüche 1 bis 8,
**dadurch gekennzeichnet,**
**dass** die Hauptisolation (6) zumindest zwei erste Schichten (14) aufweist, zwischen denen die zumindest eine zweite Schicht (15) angeordnet ist.

10. Isolationsanordnung nach einem der Ansprüche 1 bis 9,
**dadurch gekennzeichnet,**
**dass** sich die zweite Schicht (15) axial und umfangsmäßig in der Hauptisolation (6) erstreckt.

11. Isolationsanordnung nach einem der Ansprüche 1 bis 10,
**dadurch gekennzeichnet,**
**dass** die zweite Schicht (15) in der Hauptisolation (6) mittig und/oder zu einer Umfangsseite der Hauptisolation (6) versetzt angeordnet.

12. Isolationsanordnung nach einem der Ansprüche 1 bis 11,
**dadurch gekennzeichnet,**
**dass** die plättchenförmigen Aluminiumoxidpartikel (16) auf einem Trägerband (27) vorgesehen sind, mit dem der Wicklungsstab (5) umwickelt ist.

13. Generator (1) mit einer Isolationsanordnung (4) nach einem der Ansprüche 1 bis 12.

14. Verfahren zur Herstellung einer Isolationsanordnung (4) für eine Hochspannungsmaschine (1) mit einem Wicklungsstab (5), mit folgenden Schritten:
- Bereitstellen eines Wicklungsstabes (5), mindestens einer ersten Schicht (14) mit plättchenförmigen Glimmerpartikeln und mindestens einer zweiten Schicht (15) mit plättchenförmigen Aluminiumoxidpartikeln (16); und
- Applizieren einer ersten und zweiten Schicht (14, 15), um eine Hauptisolation (6) auf dem Wicklungsstab (5) zu bilden.

15. Verfahren nach Anspruch 14,
**dadurch gekennzeichnet,**
**dass** die plättchenförmigen Glimmerpartikel und die plättchenförmigen Aluminiumoxidpartikel (16) auf einem Trägerband (27) bereitgestellt werden und die erste und zweite Schicht (14, 15) durch Umwickeln des Wicklungsstabes (5) erzeugt werden.

## Claims

1. Insulation arrangement (4) for a high-voltage machine (1), with a winding bar (5), which has a main insulation (6) with a first and a second layer (14, 15), the first layer (14) having mica particles in platelet form and the second layer (15) having alumina particles (16) in platelet form.

2. Insulation arrangement according to Claim 1,
**characterized**
**in that** the second layer (15) is designed for transporting heat in the axial direction (17) of the winding bar (5).

3. Insulation arrangement according to Claim 1 or 2,
**characterized**
**in that** the alumina particles (16) in platelet form have an aspect ratio of 10 to 100.

4. Insulation arrangement according to one of Claims 1 to 3,
**characterized**
**in that** the alumina particles (16) in platelet form are oriented as lying flat within the second layer (15) and are in contact with one another.

5. Insulation arrangement according to one of Claims 1 to 4,
**characterized**
**in that** neighboring alumina particles (16) in platelet form butt against one another in the axial direction (17) or at least partially overlap.

6. Insulation arrangement according to one of Claims 1 to 5,
**characterized**
**in that** the alumina particles (16) in platelet form within the second layer (16) are arranged in multiple levels (19).

7. Insulation arrangement according to Claim 6,
**characterized**
**in that** the alumina particles (16) in platelet form in neighboring levels (19) are arranged offset in relation to one another.

8. Insulation arrangement according to one of Claims 1 to 7,
**characterized**
**in that** the second layer (15) has over 20% by volume, preferably over 35% by volume, of alumina particles (16) in platelet form embedded in a matrix.

9. Insulation arrangement according to one of Claims 1 to 8,
**characterized**
**in that** the main insulation (6) has at least two first layers (14), between which the at least one second layer (15) is arranged.

10. Insulation arrangement according to one of Claims 1 to 9,
**characterized**
**in that** the second layer (15) extends axially and circumferentially in the main insulation (6).

11. Insulation arrangement according to one of Claims 1 to 10,
**characterized**
**in that** the second layer (15) in the main insulation (6) is arranged centrally and/or offset to a circumferential side of the main insulation (6).

12. Insulation arrangement according to one of Claims 1 to 11,
**characterized**
**in that** the alumina particles (16) in platelet form are provided on a carrier tape (27), with which the winding bar (5) is wound.

13. Generator (1) with an insulation arrangement (4) according to one of Claims 1 to 12.

14. Method for producing an insulation arrangement (4) for a high-voltage machine (1) with a winding bar (5), comprising the following steps:
- providing a winding bar (5), at least one first layer (14) with mica particles in platelet form and at least one second layer (15) with alumina particles (16) in platelet form; and
- applying a first and a second layer (14, 15), in order to form a main insulation (6) on the winding bar (5).

15. Method according to Claim 14,
**characterized**
**in that** the mica particles in platelet form and the alumina particles (16) in platelet form are provided on a carrier tape (27) and the first and second layers (14, 15) are produced by winding around the winding bar (5).

## Revendications

1. Dispositif d'isolation (4) pour une machine à haute tension (1), avec une barre d'enroulement (5), laquelle présente une isolation principale (6) avec une première et une deuxième couche(14, 15), dans lequel la première couche (14) présente des particules de mica en forme de plaquettes et la deuxième couche (15) présente des particules d'oxyde d'aluminium (16) en forme de plaquettes.

2. Dispositif d'isolation selon la revendication 1, **caractérisé en ce que** la deuxième couche (15) est aménagée afin de transporter de la chaleur dans le sens axial (17) de la barre d'enroulement (5).

3. Dispositif d'isolation selon la revendication 1 ou 2, **caractérisé en ce que** les particules d'oxyde d'aluminium (16) en forme de plaquettes présentent un rapport d'aspect de 10 à 100.

4. Dispositif d'isolation selon l'une des revendications 1 à 3, **caractérisé en ce que** les particules d'oxyde d'aluminium (16) en forme de plaquettes sont disposées sur la pleine surface de la deuxième couche (15) et se touchent.

5. Dispositif d'isolation selon l'une des revendications 1 à 4, **caractérisé en ce que** les particules d'oxyde d'aluminium (16) en forme de plaquettes voisines sont contiguës les unes aux autres ou se chevauchent au moins partiellement dans le sens axial (17).

6. Dispositif d'isolation selon l'une des revendications 1 à 5, **caractérisé en ce que** les particules d'oxyde d'aluminium (16) en forme de plaquettes sont disposées au sein de la deuxième surface (16), en plusieurs couches (19).

7. Dispositif d'isolation selon la revendication 6, **caractérisé en ce que** les particules d'oxyde d'aluminium (16) en forme de plaquettes sont disposées en quinconce l'une par rapport à l'autre au sein de couches voisines (19).

8. Dispositif d'isolation selon l'une des revendications 1 à 7, **caractérisé en ce que** la deuxième couche (15) présente plus de 20 % en volume, de préférence plus de 35 % en volume de particules d'oxyde d'aluminium (16) sous forme de plaquettes logées dans une matrice.

9. Dispositif d'isolation selon l'une des revendications 1 à 8, **caractérisé en ce que** l'isolation principale (6) présente au moins deux premières couches (14) entre lesquelles l'au moins une deuxième couche (15) est disposée.

10. Dispositif d'isolation selon l'une des revendications 1 à 9, **caractérisé en ce que** la deuxième couche (15) s'étend axialement et périphériquement dans l'isolation principale (6).

11. Dispositif d'isolation selon l'une des revendications 1 à 10, **caractérisé en ce que** la deuxième couche (15) est disposée de manière centrale dans l'isolation principale (6) et/ou déplacée par rapport à un côté périphérique de l'isolation principale(6).

12. Dispositif d'isolation selon l'une des revendications 1 à 11, **caractérisé en ce que** les particules d'oxyde d'aluminium (16) sous forme de plaquettes sont prévues sur une bande de support (27) qui enroule la barre d'enroulement (5).

13. Générateur (1) avec un dispositif d'isolation (4) selon l'une des revendications 1 à 12.

14. Procédé de fabrication d'un dispositif d'isolation (4) pour une machine à haute tension (1) avec une barre d'enroulement (5), comprenant les étapes suivantes :
- Mise à disposition d'une barre d'enroulement (5), d'au moins une première couche (14) avec des particules de mica sous forme de plaquettes et d'au moins une deuxième couche (15) avec des particules d'oxyde d'aluminium (16) sous forme de plaquettes ; et
- Application d'une première et deuxième couche (14, 15), afin de constituer une isolation principale (6) sur la barre d'enroulement (5).

15. Procédé selon la revendication 14, **caractérisé en ce que** les particules de mica en forme de plaquettes et les particules d'oxyde d'aluminium (16) en forme de plaquettes sont mises à disposition sur une bande de support (27) et la première et la deuxième couche (14, 15) sont constituées par enroulement de la barre d'enroulement (5).
